(19) **Europäisches Patentamt / European Patent Office / Office européen des brevets**

(11) **EP 2 420 875 A1**

(12) **EUROPEAN PATENT APPLICATION**
published in accordance with Art. 153(4) EPC

(43) Date of publication:
**22.02.2012 Bulletin 2012/08**

(21) Application number: **10737461.3**

(22) Date of filing: **26.02.2010**

(51) Int Cl.:
**G02B 6/028** (2006.01)    **G02B 6/036** (2006.01)

(86) International application number:
**PCT/CN2010/070778**

(87) International publication number:
**WO 2011/020315 (24.02.2011 Gazette 2011/08)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **18.08.2009  CN 200910063643**

(71) Applicant: **Yangtze Optical Fibre And Cable Company, Ltd.**
**Wuhan Hubei 430073 (CN)**

(72) Inventors:
• **ZHANG, Fanghai**
  **Wuhan, Hubei 430073 (CN)**

• **CAO, Beibei**
  **Wuhan, Hubei 430073 (CN)**
• **HAN, Qingrong**
  **Wuhan, Hubei 430073 (CN)**
• **RAADJKOEMAR, Matai**
  **Wuhan, Hubei 430073 (CN)**

(74) Representative: **Zeuner Summerer Stütz**
**Nußbaumstrasse 8**
**80336 München (DE)**

(54) **BENDING-RESISTANT MULTIMODE OPTICAL FIBER AND MANUFACTURING METHOD THEREOF**

(57)    A multi-mode fiber comprises a core and a cladding. The core has a radius (R1) of 24-26 μm, the refractive index profile thereof is a parabola, and the maximum relative refractive index difference (Δ1) is 0.9-1.1 %. The cladding surrounds the core and comprises an inner cladding, a middle cladding, and an outer cladding from inside to outside; a radius (R2) of the inner cladding is 1.04-1.6 times that of the core, and a relative refractive index difference (Δ2) thereof is -0.01-0.01%; the middle cladding is a graded refractive index cladding whose radius (R3) is 1.06-1.8 times that of the core, and a relative refractive index difference thereof is decreased gradually from Δ2 to Δ4; and a radius (R4) of the outer cladding is 2.38-2.63 times that of the core, and a relative refractive index difference (Δ4) thereof is between -0.20 and -0.40%. The invention reduces the additional bending loss of the fiber, improves the bending resistance and mechanical properties, basically eliminates the internal stress, and ensures the service life of the fiber even working for a long term under the condition of small radius. The method for manufacturing the fiber is simple, effective, and suitable for mass production.

**FIG. 3**

**Description**

FIELD OF THE INVENTION

The invention relates to the field of optical communication technology, and more particularly to a multi-mode fiber suitable for access network or miniaturized optical apparatus, as well as to a manufacturing method thereof. The fiber has excellent bending resistance.

BACKGROUND OF THE INVENTION

Multi-mode fibers, particularly those with high bandwidth(e.g., OM3), are widely used in short-medium distance optical fiber network system (such as data centers and campus networks) due to low cost of system construction. When the fibers are used in indoor and narrow environment, the fibers endure a high bending stress. Particularly, when the fibers are wrapped in a small storage box, fibers are exposed to great bending stress. Thus, to meet the requirements of the network construction and apparatus miniaturization, bending resistant multi-mode fibers are desired. In comparison with conventional multi-mode fibers, bending resistant multi-mode fibers are desired to possess the following properties. First, low additional bending loss, particularly, low additional macro-bend loss. The multi-mode fibers have a plurality of transmission modes, and high order mode transmitted close to the edge of the core of the multi-mode fiber is easily leaked out when fiber bending. One part of the light leaked from the core will return to the core, one part thereof will transmit in a cladding, and another part thereof will pass through a coating and leak out. When the bending radius decreases, more light leaks out, and the system attenuation increases, thereby resulting in signal distortion and system error. Second, the service life of the multi-mode fiber should not be affected under small bending radius. Bending resistant multi-mode fibers may work at small bending radius for a long term. When the fiber bends, the outside thereof is exposed to tensile stress. The tensile stress is represented by the following formula:

$$\sigma = \frac{E \cdot r}{(R + C_{th} + r)}$$

wherein E represents young's modulus of silica glass, R represents a bending radius, r represents the radius of a fiber, and $C_{th}$ represents the thickness of a coating. For a fiber with a glass cladding diameter of 125 $\mu$m and an outer diameter of 250 $\mu$m, when the bending radius is decreased to 6.5 mm, the tensile stress imposed on the outer bending wall of the fiber is 0.69 GPa (100 kpsi), which reaches the common screening tension of fibers. Fiber fracture caused by bending occurs in the process of fiber-laying,, thereby increasing the laying cost. More seriously, the fiber will fracture in using process because the micro-crack will expand when the tensile stress imposed on the fiber, thereby increasing maintenance cost and affecting the reliability of the systems in the application of FTTx. Thus, in comparison with common multimode fibers, bending resistant multi-mode fibers must have good mechanical properties so as to possess long service life under low bending radius. So the fibers should have smaller residual stress and fewer defects. Third, bending resistant multi-mode fibers should have a high bandwidth so as to meet the transmission requirement of Ethernet of 10 Gb/s or even 40 Gb/s .

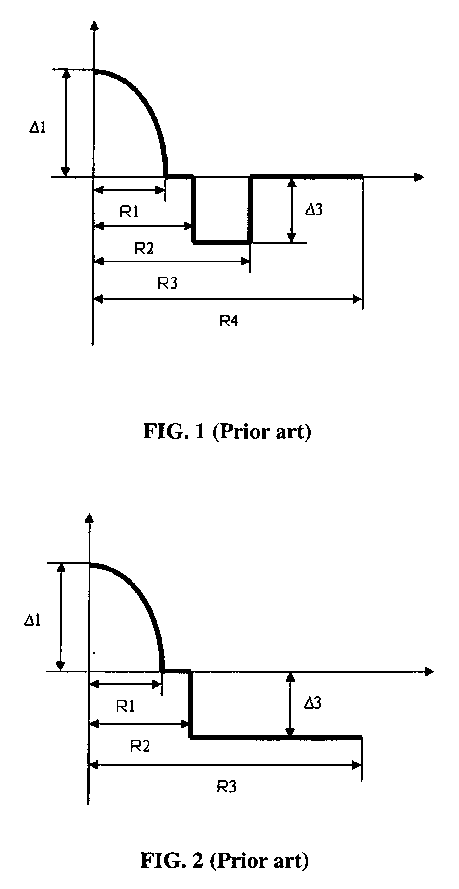

An effective method to decrease the additional bending attenuation of the fibers is to design a depressed cladding, whose refractive index profile is a trench-type (as shown in FIG 1) or a double cladding type (as shown in FIG 2). The method is disclosed in U.S. Pat. No.20080166094A1, U.S. Pat. No.20090169163A1, and U.S. Pat. No. 20090154888A1. The principle of the method is that when the fiber bends slightly, the light leaked from the core are restricted in the inner cladding to a large extent and finally return to the core, and thereby the additional macro-bend loss of the fibers decreases effectively.

However, how to ensure long service life of such fibers working for a long term at small bending radius is an urgent problem to be solved. The fiber whose refractive index profile is shown in FIG 1 has a highly germanium doped core and a highly fluorine doped depressed cladding. The core and the depressed cladding are close to each other. The coefficient of expansion of silica glass doped with germanium is significantly different from that doped with fluorine. Thus, high internal stress is produced inside the fiber. Although the additional bending loss caused by the stress can be solved by designing a depressed cladding, the service life of the fiber has been seriously affected by the internal stress. In addition, when fiber bending, the stress causes the profile structure of the fiber to distort, which affects the transmission bandwidth. The fiber whose refractive index profile is shown in FIG 2 has the same material composition as disclosed in the above mentioned US patents, but just like the fiber whose refractive index profile is shown in FIG 1, the high internal stress is still produced. And the internal stress originated from different thermal expansion coefficient of different layers is temporary stress, and it's hardly removed by adjusting the process, but can be removed by designing appropriate material composition and structure. The appendix of fiber standard ITU-TG.657 briefly describes the prediction of fiber life. The service life of fibers is related to the dynamic fatigue parameters (nd) thereof. Under identical bending radius and storage length, the higher the dynamic fatigue parameters of fibers, the higher the mechanical reliability thereof. Thus, the effect of improving the material composition and the profile structure of the fiber can be examined by testing the dynamic fatigue parameters nd thereof.

In addition, to make a multi-mode fiber has good bandwidth, the refractive index profile thereof should be a close-to-perfection parabola. Some literatures including Chinese Patent No. 1183049C disclose methods for preparing a preform with accurate refractive index distribution. However, in comparison with the refractive index distribution of the perform, in the process of fiber drawing, due to residual stress and the diffusion of compositions, the refractive index distribution of the fiber may distort. That is to say, even if the refractive index distribution of a preform is a perfect parabola, that of a fiber drawn therefrom is hard to keep as the perfect parabola.

SUMMARY OF THE INVENTION

To expediently describe the invention, partial technical terms involved are defined as below:

"Mandrel" refers to a preform comprising a core and some claddings coated thereon.

"Radius" refers to a distance between the outer boundary of a layer and a central point thereof.

"Refractive index profile" refers to the relation between the glass refractive index of a fiber or a fiber preform (such as a mandrel) and the radius thereof.

"Relative refractive index difference" is defined by the following formula:

$$\Delta\% = \left[ \left( n_i{}^2 - n_0{}^2 \right) \Big/ 2n_i{}^2 \right] \times 100\% \approx \frac{n_i - n_0}{n_0} \times 100\% \quad ,$$

wherein $n_i$ and no represent the refractive index of a material and pure silica glass, respectively, and $n_i$ represents the maximum refractive index unless stated otherwise.

"The contribution of fluoride" refers to the relative refractive index difference ($\Delta_F$) between a fluoride-doped silica glass and a pure silica glass, representing the amount of doped fluoride.

"The contribution of germanium" refers to the relative refractive index difference ($\Delta_{Ge}$) between a germanium-doped silica glass and a pure silica glass, representing the amount of doped germanium.

"Casing tube" refers to a pure silica glass tube with a certain geometry and doping requirement.

"RIT process" refers to inserting a mandrel into a casing tube to form a fiber preform.

"Exponential refractive index profile" refers to a refractive index profile which satisfies with a exponential function, and the exponential function is represented by the following formula:

$$n^2(r) = n_1^2 [1 - 2\Delta(\frac{r}{a})^\alpha] \quad r<a,$$

wherein $n_1$ represents the refractive index of the axis of a fiber, r represents a distance reaching the axis of the fiber, a represents the radius of the core of the fiber, $\alpha$ represents a distribution index, and $\Delta$ represents a relative refractive index difference of the core/the cladding.

In view of the above-described problems, the objects of the invention is to provide a multi-mode fiber having rational structure, high mechanical reliability, long service life, good bending resistance, and high bandwidth, as well as to provide a manufacturing method thereof.

To achieve the above objects, the present invention provides a multi-mode fiber, and the multi-mode fiber comprises a core and a cladding, wherein the core has a radius (R1) of 24-26 $\mu$m, the refractive index profile thereof is a parabola (the range of a is 1.9-2.2), and the maximum relative refractive index difference ($\Delta$1) is 0.9-1.1%; the cladding surrounded the core is composed of three parts, from inside to outside an inner cladding, the cladding comprises an inner cladding, a middle cladding, and an outer cladding; a radius (R2) of the inner cladding is 1.04-1.6 times that of the core, and a relative refractive index difference ($\Delta$2) thereof is -0.01-0.01%; the middle cladding is a graded refractive index cladding whose radius (R3) is 1.06-1.8 times that of the core, and a relative refractive index difference thereof is decreased from $\Delta$2 to $\Delta$4; and a radius (R4) of the outer cladding is 2.38-2.63 times that of the core, and a relative refractive index difference ($\Delta$4) thereof is between -0.20 and -0.40%.

In a class of this embodiment, preferably, the radius (R2) of the inner cladding is 1.04-1.25 times that of the core.

In a class of this embodiment, the relative refractive index difference (△4) of the outer cladding is constant, on the increase, or on the decrease gradually along the radial direction from inside to outside. The preferred embodiment is that the relative refractive index is on the increase gradually from inside to outside.

In a class of this embodiment, the relative refractive index difference (△4) of the outer cladding is on the increase gradually from inside to outside, from -0.40% to -0.25%, or from -0.35% to -0.15%.

In a class of this embodiment, the relative refractive index difference (△4) of the outer cladding is on the decrease gradually from inside to outside, from -0.15% to -0.35%, or from -0.10% to -0.30%.

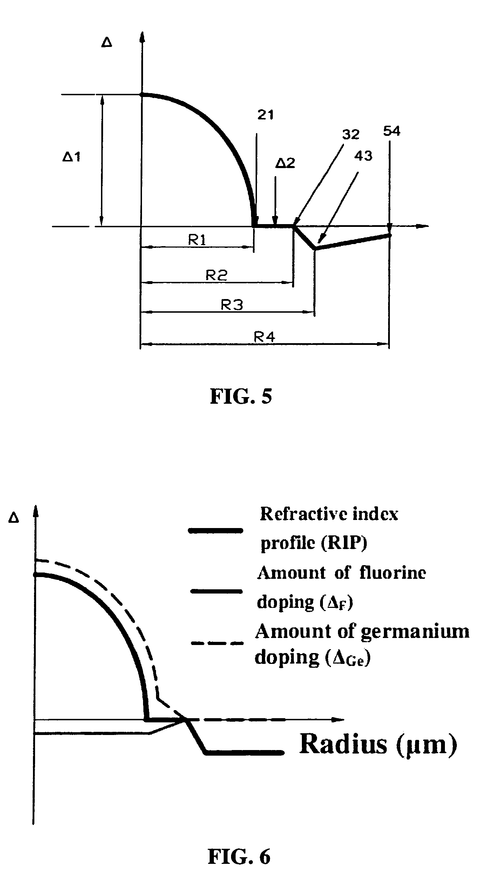

In a class of this embodiment, the doping profile of the fiber is shown in FIG 6, and the core comprises silica glass doped with germanium and fluorine, and the amount of the contribution of fluoride ($\Delta_F$) is -0.03 $\pm$ 0.02%; the inner cladding comprises silica glass doped with germanium and fluorine, and the amount of doped fluorine and germanium is on the increase gradually from the outer interface 32 to the inner interface 21, exhibiting a gradient change; the middle cladding comprises silica glass doped with fluorine, and the amount of doped fluorine is on the increase gradually from the inner interface 32 to the outer interface 43; and the outer cladding comprises silica glass doped with fluorine.

In a class of this embodiment, the material composition of the silica glass doped with germanium and fluorine is $SiO_2$-$GeO_2$-F-Cl, and the material composition of the silica glass doped with fluorine is $SiO_2$-F-Cl.

In a class of this embodiment, the introduced chlorine originates from the reaction between silicon tetrachloride ($SiCl_4$) and/or germanium tetrachloride ($GeCl_4$) and oxygen. The fluctuation of chlorine content has little influence on the properties of the fiber. Moreover, the chlorine content has little fluctuation under stable process conditions. Thus, there is no need of specific control and requirement on the chlorine content.

A method for manufacturing a multi-mode fiber comprises the steps of: fixing a pure silica glass liner tube on a plasma enhanced chemical vapor deposition (PCVD) lathe for doping and depositing; adding a fluorine-containing gas into the reactive gases of silicon tetrachloride and oxygen to introduce fluorine doping and adding germanium tetrachloride into the reactive gases of silicon tetrachloride and oxygen to introduce germanium doping; ionizing the reactive gas in the liner tube with microwave into plasma and depositing the plasma on the inner wall of the liner tube in the form of glass; altering the flow of the doped gas in the mixed gas according to the doping requirements of optical waveguide structure and depositing a middle cladding, an inner cladding, and a core in sequence; melting a depositing tube into a solid mandrel with an electric heating furnace after depositing; corroding the mandrel with hydrofluoric acid so as to remove the liner tube layer; preparing a fiber preform using RIT process with synthetic fluorine-doped silica glass as a casing tube, or by depositing an outer cladding surrounding the solid mandrel using OVD or VAD process; drawing the fiber preform in a fiber drawing tower with a low tension of 0.2-0.4 N to yield a fiber and coating two layers of UV-cured acrylic resin polymer on the surface of the fiber.

In a class of this embodiment, the fluorine-containing gas is $C_2F_6$, $CF_4$, $SiF_4$, $SF_6$, or a mixture thereof.

To produce a multi-mode fiber with accurate refractive index distribution, in the process of preparing a fiber preform, based on a comparison between the refractive index distribution of the fiber and the refractive index distribution of the perform, the refractive index distribution of the preform is amended and compensated so as to produce a multi-mode fiber with accurate refractive index distribution. The method for amending and compensating the refractive index distribution of a preform comprises the steps of:

1.designing a refractive index distribution of a fiber preform according to a refractive index distribution of a multi-mode fiber;

2.adjusting the composition of a gas mixture and supply rate thereof used for preparing the target preform so as to match the refractive index distribution determined in the step 1;

3. introducing the reactive gas mixture into a liner tube to deposit a glass oxide on the inner of the liner tube and form the fiber perform according to the condition determined in the last step;

4. measuring the refractive index distribution of the preform obtained from the depositing process of the step 3 and drawing the preform into a fiber;

5. measuring the refractive index distribution of the fiber obtained from the step 4;

6.comparing the refractive index distribution of the fiber measured by the step 5 with an expected refractive index distribution of the fiber, which is designed based on the measurement results of the fiber, and amending the refractive index distribution of the preform based on the contrast result if the contrast difference exceeds the desired tolerance range;

7. altering the relation of the composition of the reactive gas mixture and the reaction time in the subsequent deposition process so as to amend the refractive index distribution of the preform in the step 6; and 8. repeating the steps from 3 to 7 until the contrast difference of the step 6 is within the tolerance range.

In a class of this embodiment, to improve the measurement accuracy of the refractive index distribution of steps 4 and 5, the measurement is carried out in a plurality of vertical positions and from a plurality of angles (at least the directions X and Y), and the mean of the measured value is calculated.

The fiber of the invention has a dynamic fatigue parameter (nd) exceeding 27, a bandwidth exceeding 2,000 or even 5,000 MHz-km at the wavelength of 850 nm, a numerical aperture of 0.195-0.230. At the wavelength of 850 nm, an additional bending loss of the fiber surrounding a 10 mm bending radius once is less than 0.2 dB or even equal to 0.03 dB; an additional bending loss of the fiber surrounding a 7.5 mm bending radius once is less than 0.3 dB or even equal to 0.05 dB; an additional bending loss of the fiber surrounding a 5 mm bending radius once is less than 1.0 dB or even equal to 0.3 dB.

Advantages of the invention are summarized below: 1. the multi-mode fiber of the invention comprises three claddings. A middle cladding with graded refractive index is disposed between the inner cladding and the outer cladding, and the material composition and waveguide structure of the fiber are reasonable, which reduces the additional bending loss, improves the bending resistance and mechanical properties, basically eliminates the internal stress of the fiber, and ensures the service life of the fiber working for a long term under the condition of small radius; 2. the fiber comprises a functionally graded material composition and structure that from the core to the outer interface of the inner cladding, the viscosity varies gradually; in the inner cladding, from outside to inside, the fluorine and germanium doping are on the increase gradually, exhibiting a gradient change, resulting in an increasing coefficient of expansion; the middle cladding makes a smooth transition of the refractive index and viscosity from the inner cladding to the outer cladding; the refractive index of the outer cladding is preferably on the increase from inside to outside, the fluorine doping decreases but the viscosity increases gradually from inside to outside,, which is conducive to the outer cladding for bearing more tension in the process of fiber drawing and decreases the influence of fiber drawing on the core; furthermore, the material composition prevents the generation of residual tension in the process of fiber drawing, which improves the mechanical properties; 3. the invention amends and compensates the refractive index distribution of the preform, the tolerance of the refractive index distribution of the fiber is controlled in a narrow range, and thus, the bandwidth performance thereof has been improved greatly; and 4.the method for manufacturing the fiber is simple, effective, and suitable for mass production.

BRIEF DESCRIPTION OF THE DRAWINGS

FIG. 1 is a schematic diagram of a refractive index profile of a fiber with a trench-type depressed cladding in the prior art;

FIG 2 is a schematic diagram of a refractive index profile of a fiber with a double-cladding-type depressed cladding in the prior art;

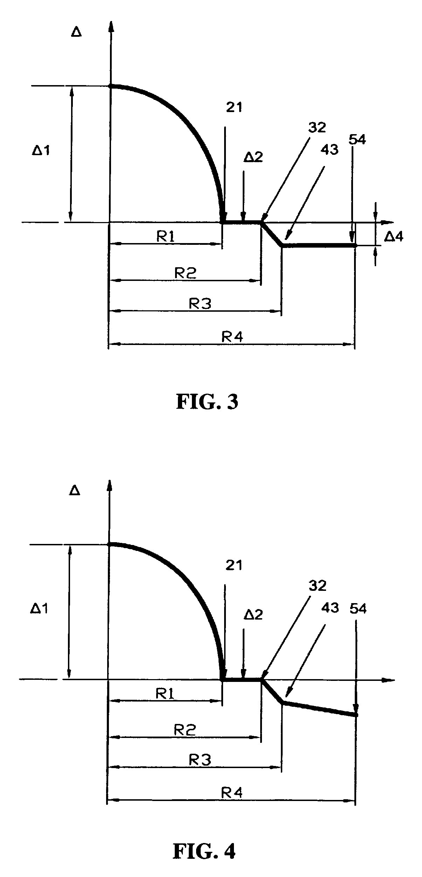

FIG 3 is a schematic diagram of a refractive index profile of a fiber according to one embodiment of the invention;

FIG 4 is a schematic diagram of a refractive index profile of a fiber according to another embodiment of the invention (the fluorine doping of the outer cladding is on the decrease from outside to inside);

FIG 5 is a schematic diagram of a refractive index profile of a fiber according to still another embodiment of the invention (the fluorine doping of the outer cladding is on the increase from outside to inside); and

FIG 6 is a schematic diagram of a doping profile of a fiber according to one embodiment of the invention.

DETAILED DESCRIPTION OF THE EMBODIMENTS

Detailed embodiments for further illustrating the invention are described below.

**Example 1**

Following the method of the invention, a group of preforms are prepared and drawn, with two layers coating and a drawing speed of 600 m/min, to yield multi-mode fibers whose structure and material composition are shown in Table 1. The main performance parameters of the fiber are listed in Table 2.

## Table 1 Structure and material composition of a multi-mode fiber

| No. | Core | | | | Inner cladding | | | |
|---|---|---|---|---|---|---|---|---|
| | R1 (μm) | Relative refractive index difference $\Delta_1$ (%) | α | The contribution of fluorine $\Delta_F$ (%) | R2 (μm) | Relative refractive index difference $\Delta_2$ (%) | The contribution of fluorine at the interface 21 $\Delta_F$ (%) | The contribution of fluorine at the interface 32 $\Delta_F$ (%) |
| 1 | 25 | 1.10 | 2.03 | -0.03 | 26 | -0.005 | -0.03 | -0.006 |
| 2 | 24.8 | 1.09 | 2.04 | -0.02 | 27 | -0.002 | -0.02 | -0.002 |
| 3 | 24.2 | 1.03 | 2.03 | -0.04 | 29 | -0.001 | -0.03 | -0.001 |
| 4 | 24 | 1.0 | 2.02 | -0.03 | 31 | 0.001 | -0.03 | 0 |
| 5 | 24.5 | 0.9 | 2.03 | -0.02 | 35 | 0.003 | -0.02 | 0 |
| 6 | 25.2 | 0.96 | 2.12 | -0.03 | 38 | 0.002 | -0.03 | -0.001 |
| 7 | 25.4 | 1.04 | 2.08 | -0.04 | 26 | -0.002 | -0.04 | -0.003 |
| 8 | 25.8 | 0.90 | 2.05 | -0.03 | 27 | -0.007 | -0.03 | -0.008 |
| 9 | 24.8 | 0.94 | 2.01 | -0.01 | 29 | -0.004 | -0.01 | -0.005 |
| 10 | 25.1 | 1.06 | 2.02 | -0.05 | 33 | -0.002 | -0.05 | -0.002 |
| 11 | 24.2 | 1.02 | 2.04 | -0.03 | 37 | 0.006 | -0.03 | 0 |

(Continued)

| No. | Graded index cladding | | Outer depressed cladding | | |
|---|---|---|---|---|---|
| | R3 (μm) | The contribution of fluorine at the interface 43 $\Delta_F$ (%) | R4 (μm) | Refractive index is constant or changed gradually? | The contribution of fluorine at the interface 54 $\Delta_F$ (%) |
| 1 | 26.5 | -0.35 | 62.5 | changed gradually | -0.15 |
| 2 | 31 | -0.10 | 62.0 | changed gradually | -0.40 |
| 3 | 32 | -0.30 | 62.4 | changed gradually | -0.20 |
| 4 | 33 | -0.20 | 62.6 | constant | -0.20 |
| 5 | 36 | -0.25 | 62.8 | constant | -0.25 |
| 6 | 40 | -0.15 | 62.9 | changed gradually | -0.32 |
| 7 | 27 | -0.25 | 62.0 | constant | -0.25 |
| 8 | 32 | -0.20 | 63.0 | constant | -0.20 |
| 9 | 31 | -0.30 | 62.4 | changed gradually | -0.20 |
| 10 | 37 | -0.35 | 62.3 | changed gradually | -0.15 |
| 11 | 39 | -0.40 | 62.7 | changed gradually | -0.10 |

## Table 2 Main performance parameters of a multi-mode fiber

| No. | Attenuation at 850 nm (dB/km) | Attenuation at 1300 nm (dB/km) | Full injection bandwidth at 850 nm (MHz-km) | Numerical aperture | Full injection bandwidth at 1300 nm (MHz-km) |
|---|---|---|---|---|---|
| 1 | 2.21 | 0.42 | 11425 | 0.220 | 863 |
| 2 | 2.20 | 0.41 | 7260 | 0.223 | 654 |
| 3 | 2.16 | 0.40 | 4102 | 0.212 | 580 |
| 4 | 2.14 | 0.40 | 3465 | 0.204 | 624 |
| 5 | 2.12 | 0.41 | 2851 | 0.199 | 438 |
| 6 | 2.14 | 0.40 | 3218 | 0.207 | 524 |
| 7 | 2.16 | 0.41 | 4312 | 0.211 | 629 |
| 8 | 2.12 | 0.40 | 9735 | 0.195 | 785 |
| 9 | 2.13 | 0.41 | 4130 | 0.205 | 587 |
| 10 | 2.19 | 0.41 | 2084 | 0.217 | 415 |
| 11 | 2.15 | 0.40 | 3815 | 0.215 | 651 |

(Continued)

| No. | Additional bending loss of the fiber surrounding a 10 mm bending radius once at 850 nm (dB) | Additional bending loss of the fiber surrounding a 7.5 mm bending radius once at 850 nm (dB) | Additional bending loss of the fiber surrounding a 5 mm bending radius once at 850 nm (dB) | Dynamic fatigue parameter |
|---|---|---|---|---|
| 1 | 0.04 | 0.05 | 0.4 | 30.5 |
| 2 | 0.03 | 0.05 | 0.3 | 28.2 |
| 3 | 0.04 | 0.07 | 0.4 | 29.1 |
| 4 | 0.07 | 0.10 | 0.7 | 27.4 |
| 5 | 0.08 | 0.12 | 0.8 | 28.3 |
| 6 | 0.07 | 0.09 | 0.8 | 29.5 |
| 7 | 0.05 | 0.07 | 0.6 | 28.2 |
| 8 | 0.09 | 0.15 | 0.9 | 29.5 |
| 9 | 0.08 | 0.14 | 0.8 | 29.0 |
| 10 | 0.04 | 0.08 | 0.5 | 28.1 |
| 11 | 0.06 | 0.11 | 0.7 | 29.2 |

The additional macro-bend loss is tested following the method of FOTP-62 (IEC 60793-1-47). The fiber to be tested is coiled into a circle with a diameter (for example, 10 mm, 15 mm, 20 mm, 30 mm, etc.), and then the change of the optical power before and after coiling is tested after the circles are loosened. The change is considered as the additional macro-bend loss of the fiber. The test is carried out under a light filled launch condition of encircled flux. The condition is obtained as follows. To a front end of a fiber to be tested, a common multi-mode fiber with a length of 2 meters and a core diameter of 50 $\mu$m is melted and linked. The middle of the multi-mode fiber is surrounded with a circle with a diameter of 25 mm. When a filled launch light is launched into the multi-mode fiber, the fiber to be tested is launched with an encircled light flux.

The filled launch bandwidth is measured following the method of FOTP-204 under the condition of filled launch.

To assess the mechanical properties of the fiber accurately, following IEC60793-1-33, the dynamic fatigue parameter (nd) thereof is determined using two point bend test.

**Example 2**

The example relates to amending and compensating the refractive index distribution of a preform according to the refractive index distribution of a fiber, so that a multi-mode fiber with accurate refractive index distribution is produced.

Based on a preliminarily-designed refractive index distribution of a preform of a multi-mode fiber, $SiCl_4$, $GeCl_4$, $C_2F_6$, and $O_2$ in the gaseous state are introduced into a silica glass liner tube and deposited in the tube using PCVD process. The supply amount of $SiCl_4$, $GeCl_4$, and $O_2$ varies with the reaction time, and that of $C_2F_6$ is constant. After depositing, the resultant deposition tube is melted into a solid mandrel which is further prepared into a preform. The refractive index distribution of the preform is measured and the preform itself is drawn to form a fiber. The refractive index distribution of the fiber is measured. The measurement result is compared with an expected refractive index distribution of the fiber. A distribution parameter a is used to represent the refractive index distribution form. If a has a big deviation, the refractive index distribution of the preform needs to be amended by altering the relation of the composition of the gas mixture and the reaction time in the subsequent deposition process. Following the method, the standard deviation of the refractive index distribution parameter a of the fiber decreases from 0.05 to 0.008.

**Example 3**

To show the effect of the invention, some fiber samples with the same profile structure and material composition as described in the above-mentioned US patents are produced using PCVD process. The dynamic fatigue parameter (nd) of the fiber is measured. To eliminate the influence of the coatings on the measurement results, all fibers have the same type and coatings with similar dimension. The drawing speed and drawing tension of the fibers are basically the same.

Test A

Fiber samples whose refractive index profile is shown in FIG 1 are prepared using PCVD process and the dynamic fatigue parameter (nd) thereof measured. The test process and measurement results are described below.

A pure silica glass liner tube is fixed on a plasma enhanced chemical vapor deposition (PCVD) lathe for doping and depositing. A reactive gas consisting of silicon tetrachloride and oxygen in the liner tube is ionized with microwave into plasma and finally deposited in the form of glass on the inner wall of the liner tube. According to the doping requirements of optical waveguide structure as shown in FIG 1, the flow of doped gas in the mixed gas is altered and a depressed cladding, an inner cladding, and a core are deposited in sequence. When depositing the depressed cladding, a fluorine-containing gas is aerated to dope fluorine. The inner cladding is pure silica glass. When depositing the core, germanium tetrachloride is aerated to dope germanium so as to acquire a profile with an increased refractive index. The depositing tube is melted into a solid mandrel with an electric heating furnace after depositing, and then a fiber preform is prepared with pure silica glass as a casing tube using RIT process. The fiber preform is drawn in a fiber drawing tower with a tension of 0.4 N to yield a fiber. The surface of the fiber is coated with two layers of UV-cured acrylic resin polymer.

The core of the fiber has no fluorine doping, and the inner and outer cladding both are pure silica glass.

The parameters of the fiber profile and the measurement results of the dynamic fatigue parameter (nd) are listed in Table 3.

**Table 3 Measurement results of profile parameter and dynamic fatigue parameter nd of "strench-type" fiber**

| No. | 12 | 13 | 14 | 15 | 16 |
|---|---|---|---|---|---|
| Δ1 (%) | 1.02 | 1.03 | 1.03 | 1.04 | 1.01 |
| R1 (μm) | 25 | 25 | 25 | 25 | 25 |
| α | 2.04 | 2.03 | 2.06 | 2.08 | 2.05 |
| Δ2 (%) | 0 | 0 | 0 | 0 | 0 |
| R2 (μm) | 25.8 | 26.1 | 26.8 | 26.4 | 26.7 |

(continued)

| No. | 12 | 13 | 14 | 15 | 16 |
|---|---|---|---|---|---|
| Δ3 (%) | -0.2 | -0.25 | -0.3 | -0.6 | -0.4 |
| R3 (μm) | 29.2 | 29.4 | 29.5 | 29.8 | 29.7 |
| Δ4 (%) | 0 | 0 | 0 | 0 | 0 |
| R4 (μm) | 62.5 | 62.5 | 62.5 | 62.5 | 62.5 |
| nd | 23 | 22 | 23 | 21 | 22 |

Test B

Fiber samples whose refractive index profile is shown in FIG 2 are prepared using PCVD process and the dynamic fatigue parameter (nd) thereof measured. The testing process and measurement results of the fibers are described below.

A pure silica glass liner tube is fixed on a plasma enhanced chemical vapor deposition (PCVD) lathe for doping and depositing. Silicon tetrachloride and oxygen, germanium tetrachloride is aerated to dope germanium, and the reactive gas in the liner tube is ionized with microwave into plasma and finally deposited in the form of glass on the inner wall of the liner tube. According to the doping requirements of optical waveguide structure as shown in FIG 2, a core is deposited by altering the flow of doped gas. The depositing tube is melted into a solid mandrel with an electric heating furnace after depositing. The solid mandrel is corroded with hydrofluoric acid so as to remove the linter tube. And then a fiber preform is prepared using RIT process with fluorine-doped silica glass as a casing tube. The fiber preform is drawn in a fiber drawing tower with a tension of 0.4 N to yield a fiber. The surface of the fiber is coated with two layers of UV-cured acrylic resin polymer.

The core of the fiber has no fluorine doping.

The parameters of the fiber profile and the measurement results of dynamic fatigue parameter (nd) are listed in Table 4.

**Table 4 Measurement results of profile parameter and dynamic fatigue parameter nd of "double claddings" fiber**

| No. | 17 | 18 | 19 | 20 | 21 |
|---|---|---|---|---|---|
| Δ1 (%) | 1.03 | 1.05 | 1.08 | 1.07 | 1.02 |
| R1 (μm) | 25 | 25 | 25 | 25 | 25 |
| α | 2.05 | 2.03 | 2.04 | 2.04 | 2.05 |
| Δ2 (%) | 0 | 0 | 0 | 0 | 0 |
| R2 (μm) | 28 | 30 | 28 | 27 | 29 |
| Δ3 (%) | -0.2 | -0.25 | -0.3 | -0.3 | -0.35 |
| R3 (μm) | 62.5 | 62.5 | 62.5 | 62.5 | 62.5 |
| nd | 23 | 22 | 23 | 22 | 21 |

From the results of Tables 2-4, it is obvious that, with the material composition and profile structure of the invention, the dynamic fatigue parameter (nd) of the fiber has been improved greatly.

**Claims**

1.   A bending resistant multi-mode fiber, comprising a core and a cladding, wherein

said core has a radius (R1) of 24-26 μm, the refractive index profile thereof is a parabola (a = 1.9-2.2), and the maximum relative refractive index difference (Δ1) is 0.9-1.1%;
said cladding surrounds said core and comprises an inner cladding, a middle cladding, and an outer cladding from inside to outside;

a radius (R2) of said inner cladding is 1.04-1.6 times that of said core, and a relative refractive index difference ($\Delta 2$) thereof is -0.01-0.01 %;

said middle cladding is a graded refractive index cladding whose radius (R3) is 1.06-1.8 times that of said core, and a relative refractive index difference thereof is decreased gradually from $\Delta 2$ to $\Delta 4$; and

a radius (R4) of said outer cladding is 2.38-2.63 times that of said core, and a relative refractive index difference ($\Delta 4$) thereof is between -0.20% and -0.40%.

2. The bending resistant multi-mode fiber as claimed in claim 1, wherein the radius of said inner cladding is 1.04-1.25 times that of said core.

3. The bending resistant multi-mode fiber as claimed in claim 1 or claim 2, wherein the relative refractive index difference ($\Delta 4$) of said outer cladding is constant, on the increase, or on the decrease gradually along the radial direction from inside to outside.

4. The bending resistant multi-mode fiber as claimed in claim 3, wherein the relative refractive index difference ($\Delta 4$) of said outer cladding is on the increase from inside to outside, from -0.40% to -0.25%, or from -0.35% to -0.15%.

5. The bending resistant multi-mode fiber as claimed in claim 3, wherein the relative refractive index difference ($\Delta 4$) of said outer cladding is on the decrease from inside to outside, from -0.15% to -0.35%, or from -0.10% to -0.30%.

6. The bending resistant multi-mode fiber as claimed in claim 1 or claim 2, wherein said core comprises silica glass doped with germanium and fluorine, with the contribution of fluoride ($\Delta_F$) of-0.03 $\pm$ 0.02%; said inner cladding comprises silica glass doped with germanium and fluorine, and the amount of doped fluorine and germanium is on the increase gradually from an outer interface (32) to an inner interface (21), exhibiting a gradient change; said middle cladding comprises silica glass doped with fluorine, and the amount of doped fluorine is on the increase gradually from said inner interface (32) to an outer interface (43); and said outer cladding comprises silica glass doped with fluorine.

7. The bending resistant multi-mode fiber as claimed in claim 6, wherein the material composition of said silica glass doped with germanium and fluorine is $SiO_2$-$GeO_2$-F-Cl, and that of said silica glass doped with fluorine is $SiO_2$-F-Cl

8. A method for manufacturing a multi-mode fiber, comprising the steps of:

fixing a pure silica glass liner tube on a plasma enhanced chemical vapor deposition (PCVD) lathe for doping and depositing;

adding a fluorine-containing gas into the reactive gases of silicon tetrachloride and oxygen to introduce fluorine doping and adding germanium tetrachloride into the reactive gases of silicon tetrachloride and oxygen to introduce germanium doping;

ionizing the reactive gas in said liner tube with microwave into plasma and depositing said plasma in the form of glass on the inner wall of said liner tube;

altering the flow of doped gas in the mixed gas according to the doping requirements of optical waveguide structure and depositing a middle cladding, an inner cladding, and a core in sequence;

melting a resultant depositing tube into a solid mandrel with an electric heating furnace after depositing ;

corroding said solid mandrel with hydrofluoric acid so as to remove said liner tube layer;

preparing a fiber preform using RIT process with fluorine-doped silica glass as a casing tube, or using OVD or VAD process by depositing an outer cladding surrounding said solid mandrel; and

drawing said fiber preform in a fiber drawing tower with a tension of 0.2-0.4 N to yield a fiber and coating two layers of UV-cured acrylic resin polymer on the surface of said fiber.

9. The method as claimed in claim 8, wherein said core comprises silica glass doped with germanium and fluorine, with the contribution of fluoride ($\Delta_F$) of-0.03 $\pm$ 0.02%; said inner cladding comprises silica glass doped with germanium and fluorine, and the amount of doped fluorine and germanium is on the increase gradually from an outer interface (32) to an inner interface (21), exhibiting a gradient change; said middle cladding comprises silica glass doped with fluorine, and the amount of doped fluorine is on the increase gradually from an inner interface (32) to an outer interface (43); and said outer cladding comprises silica glass doped with fluorine.

10. A method for amending and compensating the refractive index distribution of said preform as claimed in claim 8 comprising the steps of:

(1) designing a refractive index distribution of a fiber preform according to a refractive index distribution of a multi-mode fiber;

(2) adjusting the composition of a gas mixture and supply rate thereof used for preparing said target preform so as to match the designed refractive index distribution determined in the step (1) ;

(3) introducing said reactive gas mixture into a liner tube to deposit a glass oxide in the tube and produce said preform according to the condition determined in the last step;

(4) measuring the refractive index distribution of said preform obtained from the depositing process of the step (3) and drawing said preform into a fiber;

(5) measuring the refractive index distribution of said fiber obtained from the step (4) ;

(6) comparing the refractive index distribution of the fiber measured by the step (5) with an expected refractive index distribution of said fiber, which is designed based on the measurement results of the fiber, and amending the refractive index distribution of said preform based on the contrast result if the contrast difference exceeds the desired tolerance range;

(7) altering the relation of the composition of said reactive gas mixture and the reaction time in the subsequent deposition process so as to amend the refractive index distribution of the perform in the step (6); and

(8) repeating the steps from (3) to (7) until the contrast difference of the step (6) is within a tolerance range.

**FIG. 1 (Prior art)**

**FIG. 2 (Prior art)**

**FIG. 3**

**FIG. 4**

**FIG. 5**

**FIG. 6**

# INTERNATIONAL SEARCH REPORT

| International application No. |
| --- |
| PCT/CN2010/070778 |

## A. CLASSIFICATION OF SUBJECT MATTER

See extra sheet

According to International Patent Classification (IPC) or to both national classification and IPC

## B. FIELDS SEARCHED

Minimum documentation searched (classification system followed by classification symbols)

IPC:G02B

Documentation searched other than minimum documentation to the extent that such documents are included in the fields searched

Electronic data base consulted during the international search (name of data base and, where practicable, search terms used)

WPI, EPODOC, CNPAT: GRADED, GRADUAL??

## C. DOCUMENTS CONSIDERED TO BE RELEVANT

| Category* | Citation of document, with indication, where appropriate, of the relevant passages | Relevant to claim No. |
| --- | --- | --- |
| P,X | CN101634728A(YANGTZE OPTICAL FIBRE & CABLE CO. LTD.) 27 Jan.2010(27.01.2010) the whole document | 1-10 |
| A | CN1269019A(MITSUBISHI RAYON CO. LTD.) 04 Oct.2000(04.10.2000) The whole document | 1-10 |
| A | US2005185906A1 (BICKHAM, Scott R. et al.) 25 Aug.2005(25.08.2005) The whole document | 1-10 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 04 May 2010 (04.05.2010) | **03 Jun. 2010 (03.06.2010)** |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>HAN，Xu<br><br>Telephone No. (86-10)8601082245899 |

Form PCT/ISA /210 (second sheet) (July 2009)

## INTERNATIONAL SEARCH REPORT

International application No.

PCT/CN2010/070778

C (Continuation).        DOCUMENTS CONSIDERED TO BE RELEVANT

| Category* | Citation of document, with indication, where appropriate, of the relevant passages | Relevant to claim No. |
|---|---|---|
| A | US6393189B1(KDD CORPORATION) 21 May 2002 (21.05.2002) | 1-10 |
| | The whole document | |
| A | US2008166094A1(LI, Ming Jun et al.)10 Jul.2008(10.07.2008) | 1-10 |
| | The whole document | |

Form PCT/ISA /210 (continuation of second sheet ) (July 2009)

## INTERNATIONAL SEARCH REPORT
### Information on patent family members

| | International application No. |
|---|---|
| | PCT/CN2010/070778 |

| Patent Documents referred in the Report | Publication Date | Patent Family | Publication Date |
|---|---|---|---|
| CN101634728A | 27.01.2010 | None | |
| CN1269019A | 04.10.2000 | WO9905548A1 | 04.02.1999 |
| | | JP11095045A | 09.04.1999 |
| | | AU8358298A | 16.02.1999 |
| | | EP1026525A1 | 09.08.2000 |
| | | AU736819B | 02.08.2001 |
| | | KR20010022243A | 15.03.2001 |
| | | EP1176437A2 | 30.01.2002 |
| | | AU8724301A | 17.01.2002 |
| | | US6529665B1 | 04.03.2003 |
| | | CA2297159C | 02.09.2003 |
| | | EP1376167A1 | 02.012004. |
| | | KR100401150B | 10.10.2003 |
| | | KR20040004477A | 13.01.2004 |
| | | AU773707B2 | 03.06.2004 |
| | | CN1119676C | 27.08.2003 |
| | | JP3916304B2 | 16.05.2007 |
| US2005185906A1 | 25.08.2005 | WO2005083484A1 | 09.09.2005 |
| | | US7024083B2 | 04.04.2006 |
| | | EP1725898A1 | 29.11.2006 |
| | | JP2007523384T | 16.08.2007 |
| | | KR20060132726A | 21.12.2006 |
| | | EP1725898B1 | 22.04.2009 |
| | | DE602005014095E | 04.06.2009 |
| US6393189B1 | 21.05.2002 | JP2000241649A | 08.09.2000 |
| US2008166094A1 | 10.07.2008 | WO2008085851A1 | 17.07.2008 |
| | | EP2102691A1 | 23.09.2009 |
| | | CN101622561A | 06.01.2010 |

Form PCT/ISA /210 (patent family annex) (July 2009)

## INTERNATIONAL SEARCH REPORT

International application No.

*PCT/CN2010/070778*

**A. CLASSIFICATION OF SUBJECT MATTER**

According to International Patent Classification (IPC) or to both national classification and IPC

G02B6/028(2006.01)i

G02B6/036(2006.01)i

Form PCT/ISA /210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080166094 A1
- US 20090169163 A1
- US 20090154888 A1
- CN 1183049C